# EUROPEAN PATENT APPLICATION

(11) **EP 0 953 978 A1**
(43) Date of publication of application: **03.11.1999**
(21) Application number: 98951738.8
(22) Date of filing: 09.11.1998
(51) Int. Cl.: G11B 27/00

(54) **MAGNETIC RECORDER/REPRODUCER AND METHOD OF MAGNETIC RECORDING/REPRODUCING**

(30) Priority: 20.11.1997 JP 31959697
(71) Applicant: Sony Precision Technology Inc., Shinagawa-ku Tokyo 141-0031 (JP)
(72) Inventor: ENOMOTO, Tsutomu, Sony Precision Technologiy Inc., Tokyo 141-0031 (JP)
(74) Representative: MÜLLER & HOFFMANN Patentanwälte
(86) International application number: JP9805030
(87) International publication number: WO9927535

(57) **Abstract**

A magnetic recording/reproducing apparatus and a magnetic recording/reproducing method using magnetic recording/reproducing unit for backup of computer data as a data recorder are provided. When a tape cassette is unloaded, position information of a magnetic tape at that time point is written into a memory provided at the tape cassette. When the tape cassette is loaded, that position information is read out from the memory to feed the magnetic tape up to the position indicated by the position information which has been read out thereafter to start recording/reproduction. Thus, time required for load/unload operation can be shortened.

## Description

### Technical Field

This invention relates to a magnetic recording/reproducing apparatus and a magnetic recording/reproducing method for a tape cassette within which magnetic tape is accommodated, and relates to, e.g., a magnetic recording/reproducing apparatus and a magnetic recording/reproducing method used for backup of computer data or preservation of measurement data, etc.

### Background Art

Hitherto, there have been known magnetic recording/reproducing apparatuses using tape cassette corresponding to the so-called 8 mm video standard as a recording medium. In such magnetic recording/reproducing apparatuses, since widely used magnetic tape is used as a recording medium, it is possible to record data of large capacity at low cost. Thus, such magnetic recording/reproducing apparatuses are suitable, e.g., for utilization as computer data backup.

Meanwhile, in the case where such recording/reproducing apparatus for a tape cassette is used as a data recorder, when the position of a magnetic tape deviates or shifts for a time period during which the tape cassette is detached from the apparatus, i.e., for a time period from the time when the tape cassette is ejected until it is loaded for a second time, it becomes impossible to recognize the last position or last reproduction position, etc. of recorded data, etc. As a result, it would become difficult to supplementarily record data thereafter or to continuously reproduce already recorded data.

For this reason, in magnetic recording/reproducing apparatuses for computer data backup used as data recorder, such an approach is employed to necessarily feed magnetic tape to the point in the vicinity of start thereof thereafter to eject tape cassette, and to necessarily feed the magntic tape up to the point in the vicinity of start thereof after the tape cassette is loaded, thus to obviate breakage of data.

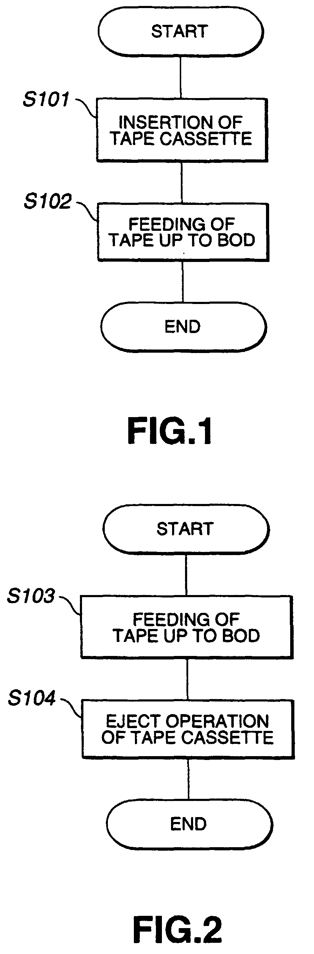

Operation sequence at the time of load/unload operations of tape cassette in conventional magnetic recording/reproducing apparatus for computer data backup will be described with reference to Figs. 1 and 2.

Fig. 1 shows operation sequence of the conventional magnetic recording/reproducing apparatus for computer data backup at the time of tape cassette load operation. In the conventional magnetic recording/reproducing apparatus for computer data backup, as shown in Fig. 1, when a tape cassette is inserted by the user (step S101), the apparatus is operative so as to feed magnetic tape to the initial portion of data (step S102).

Fig. 2 shows operation sequence of the conventional magnetic recording/reproducing apparatus for computer data backup at the time of tape cassette unload operation. In the conventional magnetic recording/reproducing apparatus for computer data backup is operative as shown in this Fig. 2, the apparatus is operative so as to feed the magnetic tape up to the initial point of data (step S103) after recording or reproduction is completed to eject the tape cassette (step S104).

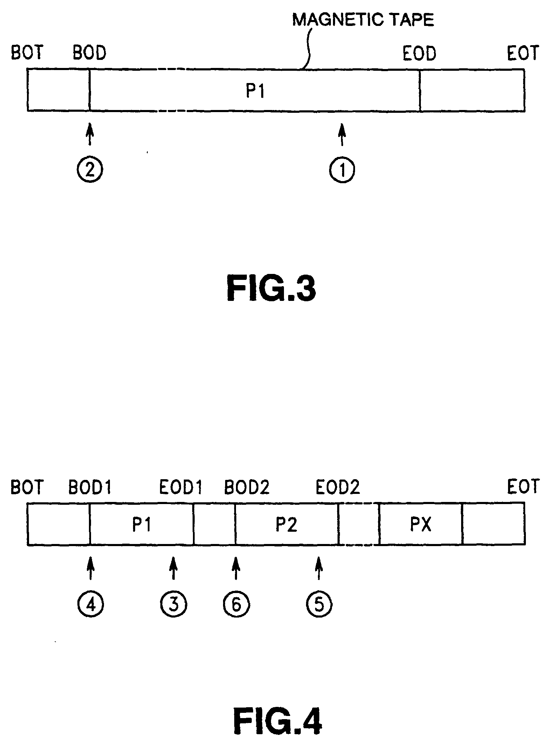

The relationship between magnetic tape and magnetic head at the load/unload operation in the conventional magnetic recording/reproducing apparatus for computer data backup used as data recorder will be explained with reference to Figs. 3 and 4.

In this case, as shown in Fig. 3, BOT (Beginning Of Tape) represents the physical beginning of tape, EOT (End Of Tape) represents the physical end of tape, BOD (Beginning Of Data) represents the beginning of data, and EOD (End Of Data) represents the end of data.

In Fig. 3, a magnetic tape of a tape format in which the entire recording area is partitioned by one partition (partition P1) is represented in a model form and relative positions of the magnetic head with respect to this magnetic tape are respectively indicated by arrows. For example, it is assumed that data is recorded or reproduced up to an intermediate point of the partition P1 and the magnetic head is located at the position between BOD and EOD on the magnetic tape (position of 1 of Fig. 3). In this case, the conventional recording/reproducing apparatus for computer data backup serves to travel the magnetic tape to allow its relative position with respect to the magnetic head to be the position (position of 2 in Fig. 3) which is the beginning of the partition P1 thereafter to eject the tape cassette.

In Fig. 4, a magnetic tape of a tape format in which the entire recording area is partitioned by 2 partitions or more (partitions P1, ··· PX) is represented in a model form, and relative positions of the magnetic bead with respect to this magnetic tape are respectively indicated by arrows. For example, it is assumed that data is recorded or reproduced up to an intermediate point of a partition (e.g., partition P1) on the magnetic tape and the magnetic head exists at the position between BOD1 and END1 (position of 3 in Fig. 4) of this partition P1. In this case, in the conventional magnetic recording/reproducing apparatus for computer data backup, such an approach is employed to travel the magnetic tape to allow its relative position with respect to the magnetic head to be the position of BOD1 (position of 4 in Fig. 4) which is the begining of the partition P1 thereafter to eject the tape cassette. Moreover, for example, it is assumed that data is recorded or reproduced up to an intermediate point of another partition (e.g., partition P2) on the magnetic tape ad the magnetic head exists at a position between BOD2 and EOD2 (position of 5 in Fig. 4) of this partition P2. In this case, in the conventional magnetic recording/reproducing apparatus for computer data backup, such an approach is employed to travel the magnetic tape to allow its relative position with respect to the magnetic head to be position of BOD2 (position 6 in Fig. 4) which is the beginning of the partition P2 thereafter to eject the tape cassette.

In the conventional magnetic recording/reproducing apparatus for computer data backup, there were instances where since such an approach is employed as stated above to necessarily feed the magnetic tape to the point in the vicinity of the beginning thereof, the position at the time of unload operation is unknown as the position of the magnetic tape deviates or shits.

In addition, feeding the magnetic tape at the time of load/unload operation takes a very long time. For example, in the case of 8mm video tape, it was required to wait for two minutes at the maximum in terms of actual time. In the case where a typical magnetic recording/reproducing apparatus is not used as data recorder, it is ordinary that load/unload operation is carried out irrespective of the position of the tape. However, in the case where the conventional magnetic recording/reproducing apparatus for computer data backup is used as data recorder, load/unload operation of the tape cassette can be carried out only at the position of BOD of the magnetic tape as described above. This causes the user to have a feeling of disagreement, and it is not convenient to use such apparatus.

This invention has been made in view of such problems and its object is to provide a magnetic recording/reproducing apparatus and a magnetic recording/reproducing method in which magnetic recording/reproducing apparatus for computer data backup is used for storage of measurement data, wherein load/unload operation of a tape cassette can be carried out even at an intermediate point of magnetic tape to thereby shorten the time required at the time of load/unload operation of the tape cassette, and to have no feeling of disagreement.

### Disclosure of the Invention

A magnetic recording/reproducing apparatus according to this invention is directed to a magnetic recording/reproducing apparatus for a tape cassette adapted so that magnetic tape is accommodated within the cassette and a memory is provided at the cassette, the apparatus comprising: magnetic tape recording/reproducing means adapted so that the tape cassette is detachably loaded to carry out recording and reproduction of data on the magnetic tape of the loaded tape cassette; memory recording/reproducing means for carrying out write and read operations of predetermined information on the memory provided at the loaded tape cassette; and position information detecting means for detecting position information of the magnetic tape. This magnetic recording/reproducing apparatus is characterized in that when the tape cassette is unloaded, it writes into the memory position information of the magnetic tape at the time of unload operation. Further, this magnetic recording/reproducing apparatus is characterized in that when the tape cassette is loaded, it reads out position information of the magnetic tape recorded at the memory. In addition, this magnetic recording/reproducing apparatus is characterized in that it serves to feed the magnetic tape on the basis of position information of the magnetic tape which has been read out.

A magnetic recording/reproducing method according to this invention is directed to a magnetic recording/reproducing method for a tape cassette adapted so that a magnetic tape is accommodated within the cassette and a memory is provided at the cassette, wherein when the tape cassette loaded at the recording/reproducing unit adapted for recording/reproducing data into the magnetic tape is unloaded, position information of the magnetic tape at the time of unload operation is written into the memory. Further, in this magnetic recording/reproducing method, when the tape cassette is loaded, position information of the magnetic tape recorded at the memory is read out. In addition, in this magnetic recording/reproducing method, a procedure is taken to feed the magnetic tape on the basis of position information of the magnetic tape which has been read out.

### Brief Description of the Drawings

Fig. 1 is a flow chart showing operation sequence at the time of tape cassette load operation with a conventional magnetic recording/reproducing apparatus.
Fig. 2 is a flow chart showing operation sequence at the time of the tape cassette unload operation with the conventional magnetic recording/reproducing apparatus.
Fig. 3 is a view showing relative positional relationship between magnetic tape and magnetic head at the time of load/unload operation in the conventional magnetic recording/reproducing apparatus. Fig. 3 shows, in a model form, magnetic tape in which the entire recording area is partitioned by one partition.
Fig. 4 is a view showing relative positional relationship between magnetic tape and magnetic head at the time of load/unload operation in the conventional magnetic recording/reproducing apparatus. Fig. 4 shows, in a model form, magnetic tape in which the entire recording area is partitioned by plural partitions.
Fig. 5 is a perspective view of the external appearance of a data recorder of an embodiment to which this invention is applied.
Fig. 6 is a block diagram of the data recorder of the embodiment to which this invention is applied.
Fig. 7 is a view for explaining information written into MIC provided at the tape cassette.
Fig. 8 is a view for explaining information content written into User Volume Note of information written into the MIC.
Fig. 9 is a view for explaining information content written into tape volume information of information written into the User Volume Note.
Fig. 10 is a view for explaining information content written into ID information of information written into the User Volume Note.
Fig. 11 is a flow chart showing operation sequence at the time of tape cassette load operation with the data recorder to which this invention is applied.
Fig. 12 is a flow chart showing operation sequence at the time of unload operation of the tape cassette of the data recorder to which this invention is applied.
Fig. 13 is a view showing relative positional relationship between magnetic tape and magnetic head at the time of load/unload operation in the data recorder to which this invention is applied. Fig. 13 shows, in a model form, magnetic tape in which the entire recording area is partitioned by one partition.
Fig. 14 is a view showing relative positional relationship between magnetic tape and magnetic head at the time of load/unload operation in a data recorder to which this invention is applied. Fig. 14 shows, in a model form, magnetic tape in which the entire recording area is partitioned by plural partitions.

### Best Mode for Carrying Out the Invention

Explanation will be given in connection with a data recorder to which this invention is applied as the best mode for carrying out this invention.

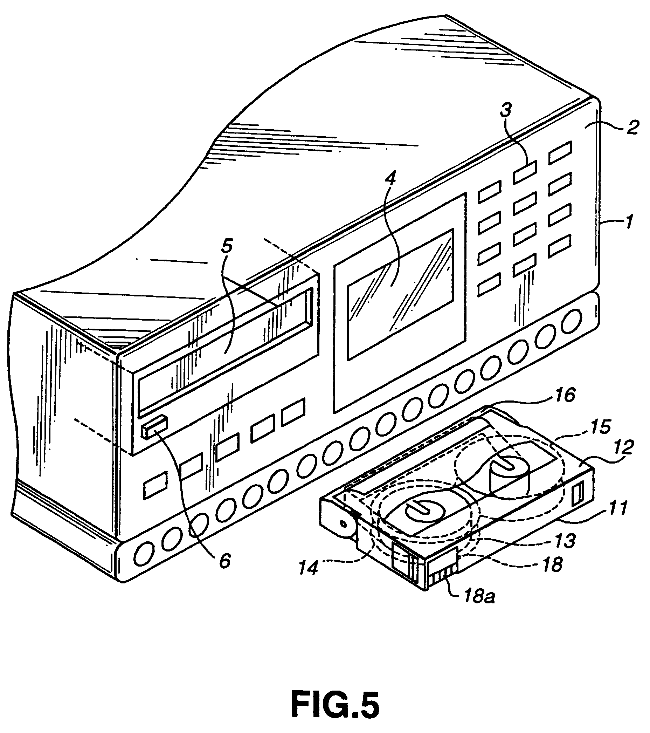

Fig. 5 is a perspective view of the external appearance of the data recorder to which this invention is applied.

The data recorder indicated by reference numeral 1 shown in Fig. 5 comprises a magnetic recording/reproducing unit in which tape cassette is used as a recording medium, and is used for computer data backup or recording of measurement data.

At a unit front panel 2 of this data recorder 1, there are provided various operation keys 3 for operation input by user and a display 4 for displaying predetermined information for the user, and there are provided a tape cassette insertion hole 5 into which a tape cassette 11 serving as a recording medium of this unit is inserted ad an eject button 6 for ejecting, toward the outside, the tape cassette 11 loaded in this unit.

In this data recorder 1, when the user inserts the tape cassette 11 into the tape cassette insertion hole 5, cassette transfer mechanism provided within the unit becomes operative to pull or draw this tape cassette 11 into the unit to load it into the recording/reproducing unit (tape cassette load operation). On the other hand, in this data recorder 1, when the user pushes the eject button 6, the cassette transfer mechanism provided within the unit becomes operative in an opposite direction to eject the tape cassette 11 loaded at the recording/reproducing unit from the tape cassette insertion hole 5 (tape cassette unload operation).

The tape cassette 11 used as a recording medium of this data recorder 1 is the so-called 8 mm video cassette in which the tape width of the magnetic tape is 8 mm. This tape cassette 11 is adapted so that a tape (magnetic tape) 13 is accommodated within a cassette casing 12 made of plastics. This tape 13 is wound on a pair of a supply reel 14 and a take-up reel 15. When the pair of the supply reel 14 and the take-up reel 15 are rotated, the above-mentioned tape 13 travels in a predetermined direction. A portion of this tape 13 is exposed from the cassette casing 12. The magnetic head comes into contact with this exposed portion to carry out data recording/reproduction. Moreover, the exposed length of the tape 13 is protected by a lid 16 that is pivotally mounted to the cassette casing 12. This lid 16 is adapted so that when the tape cassette 11 is ejected from the data recorder 1, it covers the exposed portion of the tape 13, while when the tape cassette 11 is loaded in the data recorder 1, it exposes the exposed portion of the tape 13.

Further, this tape cassette 11 is mounted with a rewritable semiconductor memory (MIC: Memory In Cassette) 18 is provided Terminals 18a of this MIC 18 are exposed from the cassette casing 12. Various information are written or read through these terminals 18a. Various information including information relating to data recorded on the tape 13 are written into this MIC 18.

In the data recorder 1 of such configuration, when the tape cassette 11 is loaded, the supply reel 14 and the take-up reel 15 are rotationally driven so that the tape 13 is traveled to carry out data recording and reproduction by the magnetic head. In addition, in the data recorder 1 of such a configuration, write and read operations of various information are carried out in the MIC 18 provided at the cassette casing 12.

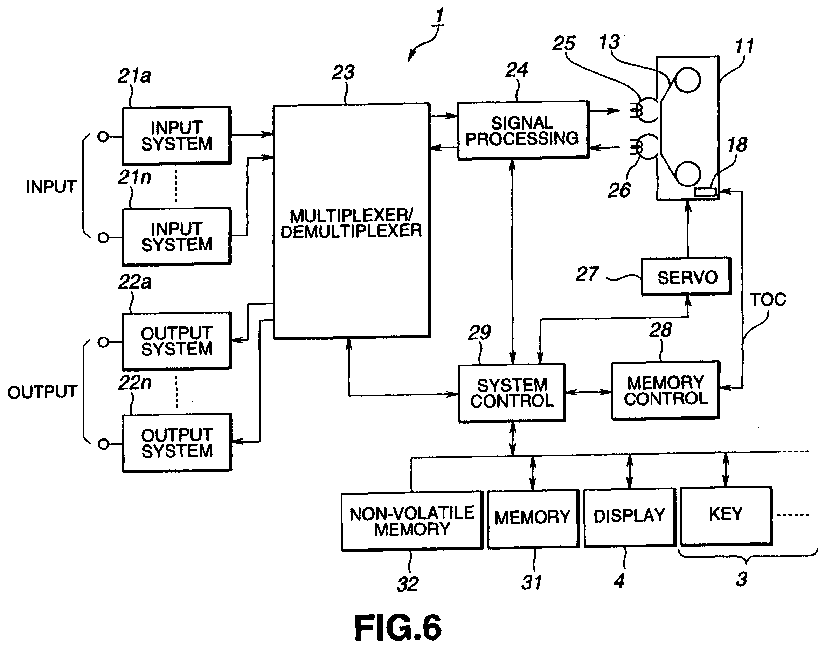

A black circuit diagram of the data recorder 1 is shown in Fig. 6.

The data recorder 1 comprises plural input systems 21a to 21n adapted so that data are inputted from various measurement units or computer, etc., plural output systems 22a to 22n for outputting data to various measurement units or computer, a multiplexer/demultiplexer 23 for switching plural data to be inputted and plural data to be outputted, a signal processing section 24 for carrying out a predetermined signal processing on data inputted from the input systems 21a to 21n to generate recording data to be recorded into the tape cassette 11, and for carrying out a predetermined signal processing on recording data reproduced from the tape cassette 11 to output it to the output systems 22a to 22n, a recording head 25 for magnetically recording into the tape cassette 11 recording data that the signal processing section 24 generates, and a reproduction head 26 for magnetically reproducing recording data recorded into the tape cassette 11 to deliver it to the signal processing section 24.

Moreover, the data recorder 1 comprises a servo section 27 for carrying out traveling control of the tape 13 of the tape cassette 11, a memory control section 28 for carrying out write and read operations of information into the MIC 18 provided at the tape cassette 11, and a system control section 29 for carrying out data switching control by the multiplexer/demultiplexer 23, signal processing by the signal processing section 24, traveling control by the servo section 27, data write and read operations by the memory control section 28, and input/output, etc. of the display 4 and the operation key 3.

In addition, the data recorder 1 comprises a memory 31 and a non-volatile memory 32 which are controlled by the system control section 29 and are adapted for storing various data.

In the data recorder 1 of such a configuration, data stored in the tape cassette 11 from a computer or an external measurement unit are inputted into respective input systems 21a to 21n. The multiplexer/demultiplexer 23 switches, e.g., in a time divisional manner, inputted plural data to deliver them to the signal processing section 24. The signal processing section 24 implements processing caused to be in correspondence with the recording format of the tape cassette 11 and other predetermined processing to data delivered through the multiplexer/demultiplexer 23 to generate recording data. Thus, recording data processed at this signal processing section 24 is recorded at the tape cassette 11 by the recording head 25.

Further, in this data recorder 1, recording data recorded at the tape cassette 11 is reproduced by the reproduction head 26 and is delivered to the signal processing section 24. The signal processing section 24 implements predetermined processing to the recording data thus delivered to generate data of a data format that the computer or external measurement unit receives. The multiplexer/demultiplexer 23 distributes data processed at the signal processing section 24 to the respective output systems 22a to 22n. The respective output systems 22a to 22n output data reproduced from the tape cassette 11 to the corresponding measurement units or computers, etc.

Further, in this data recorder 1, the servo section 27 carries out traveling control or tracking control of the tape 13 of the tape cassette 11 on the basis of control of the system control section 29. Further, in this data recorder 1, according to the system control section 29, the memory control section 28 generates information to be stored into the MIC 18 to write information and reads out information that the MIC 18 stores. In addition, in this data recorder 1, the system control section 29 precisely detects the tape position, etc. by making reference to record number on the tape 13 to carry out control of the servo section 27 and control of the memory control section 28.

The processing at the time of load and unload operations of the tape cassette 11 in this data recorder 1 will now be described.

In this data recorder 1, at the time of unload operation of the tape cassette 11, there is carried out a processing for writing the position information that indicates the position of the tape 13 at that time point into the MIC 18 provided at the tape cassette 11. Further, in this data recorder 1, at the time of load operation of the tape cassette 11, there is carried out a processing for reading out the position information that indicates the position of the tape 13 written in this MIC 18. In addition, in this data recorder 1, at the time of load operation of the tape cassette 11, there is carried out a processing for reading out the position information of the tape 13 from the MIC 18 thereafter to feed the tape 13 up to the position indicated by the position information which has been read out.

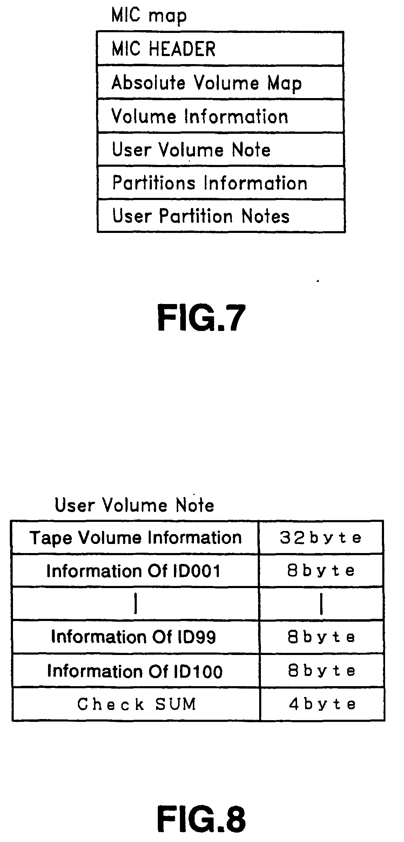

Fig. 7 shows an example of information written in the MIC 18 provided at the tape cassette 11.

The MIC 18 comprises respective areas of "MIC HEADER" "Absolute Volume Map," "Volume Information," "User Volume Note," "Partitions Information" and "User Partition Note." "User Volume Note" is the area into which the user can freely or desirably write data.

Fig. 8 indicates the content of information written in the "User volume Note."

In this "User Volume Note," there are recorded "Tape Volume information," 100 "ID information" from ID No. 001 to 100 and "Check SUM." "Tape Volume information" is data of 32 bytes, each of "ID information" is data of 8 bytes, and "Check SUM" is data of 4 bytes. Accordingly, the entirety of "User Volume Note" is data of 836 bytes. In "Tape Volume Information," TOC (Table Of Contents) indicating information of the entirety of the tape 13 is recorded. In "ID information," delimit information of data recorded on the tape 13 is recorded. The user can delimit or partition, in arbitrary time units, data recorded on the tape 13 at the time of recording. Further, information necessary when the user delimits or partitions data in arbitrary time units is recorded as delimit information. "Check SUM" has recorded in it 2's complement of the 4 least significant bytes of the sum of "Tape Volume information" and "ID information" added in 4 bytes units.

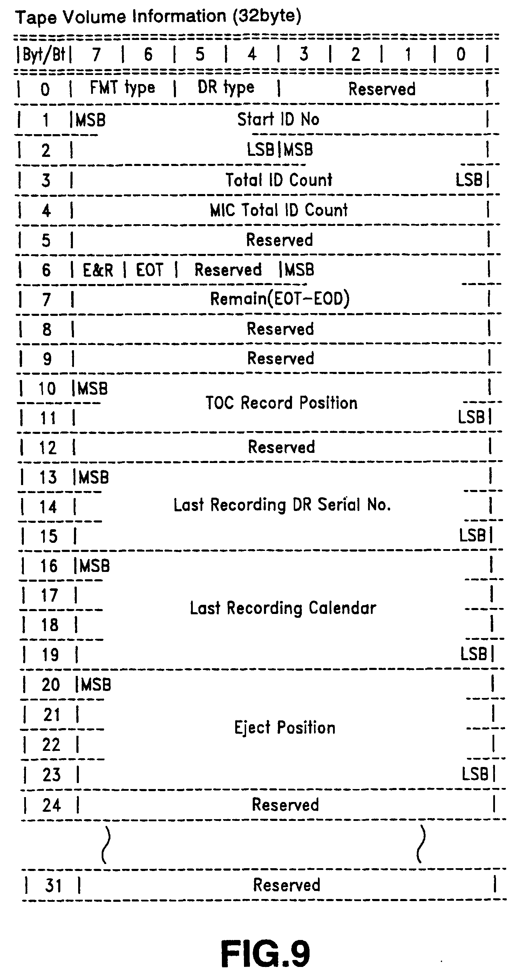

Fig. 9 shows further detailed content of information recorded in the above-mentioned "Tape Volume information." In Fig. 9, byte positions of data within "Tape Volume information" are indicated on the ordinate and bit positions of data in the byte positions are indicated on the abscissa.

FMT Type is data of 2 bits indicating the type of the format of the tape 13. DR Type is data of 2 bits indicating the machine type of the data recorder. Start ID No is data of 1.5 bytes indicating the ID value of the tape beginning and is represented by 001h to 3E7h. Total ID Count is data of 1.5 bytes indicating the number of IDs of the entirety of the tape 13 and is represented by 000h to 3E8h.

MIC Total ID Count is data of 1 byte indicating the number of IDs within the MIC. Up to 100 individual information by ID can be recorded in the MIC. In order to recognized individual information of all IDs in the case where the number of IDs is 101 or more, it is necessary to read TOC data recorded on the tape 13. The data recorder has TOC data also at the internal FLASH. The data recorder employs data in order of MIC, FLASH and TAPE.

E & R is data of 1 bit indicating whether or not EOT and Remain are valid. EOT is data of 1 bit indicating whether or not data is recorded up to the last point of the tape 13. Namely, EOT indicates whether or not supplementary recording can be made. Remaina is data of 1.5 bytes indicating recordable time when recording is made at the standard speed from EOD up to EOT. This Remain is represented by 000h to FFFh (4095 minutes). For example, in the case of e.g., 170 m tape, recordable time is about 132 minutes at the maximum 83h.

TOC Record Position is data of 2 bytes indicating recording position of TOC on the tape 13. Last Recording DR serial No is data of 3 bytes indicating serial number last recorded of the data recorder. Last Recording Calender is data of 4 bytes indicating recording year, month, day, time, minute, second of data last recorded.

Eject Position is data of 4 bytes in which record No. at the time of unload operation of the tape cassette 11 is written. In this Eject Position, there are used data of 0h to FFFFFFFFh. This Eject Position is recorded into 20th to 23rd byte position within Tape Volume Information. The record No. is the number successively attached every about 170 ms to the data recorded on the tape. By making reference to this record number, it is possible to precisely detect the tape position. The system control section 29 detects, at the time of unload operation of the tape cassette 11, the position information of the tape 13, ie., record No. to write this detected record No. into Eject Position. Further, the system control section 29 reads out the record number written in Eject Position at the time of load operation of the tape cassette 11 to travel the tape 13 to carry out tracking such that the recording head 25 (or the reproduction head 26) is located at the position of the record number which has been read out. In this example, e.g., in the case where compulsory reset, etc. is made so that tape position at the time of unload operation cannot be detected, e.g., FFFFFFFFh is written into this Eject Position.

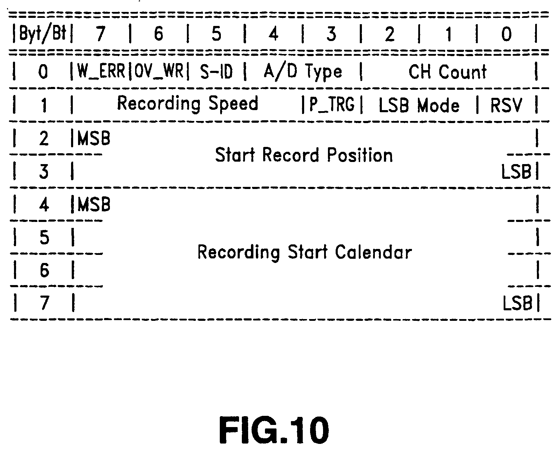

Moreover, Fig. 10 shows further detailed content of information recorded in the above-mentioned "ID information" corresponding to the respective IDs of 001 to 100. In Fig. 10, the byte positions of the respective data within "ID information" are indicated on the ordinate and the bit positions of the respective data at the respective byte positions are indicated on the abscissa.

W_ERR is data of 1 bit indicating whether or not data being recorded are successive. OV_WR is data of 1 bit indicating whether or not data is overwritten from an intermediate point of recording data. S-ID is data of 1 bit indicating whether or not ID is start ID. A/D Type is data of 2 bits indicating whether recorded data is data based on analog signal, data based on digital signal or data based on analog signal and digital signal. CH Count is data of 3 bits indicating the number of channels of data based on analog signal or the number of channels based on digital signal. Recording Speed is data of 4 bits indicating the recording speed of the tape.

P_TRG is data of 1 bit indicating whether or not pre-trigger recording is carried out. LSB Mode is data of 1 bit indicating the channel mode of LSB. Start Record Position is data of 2 bytes indicating the recording start position of the corresponding ID. Recording Calender is data of 4 bytes indicating the recording year, month, day, minute, second of data.

As mentioned above, the above-described information are recorded at the MIC 18. Particularly, by recording Eject Position at the MIC 18, it is possible to detect the position of the tape 13 at the time of unloading the tape cassette 11.

The operation sequence at the time of loading/unloading the tape cassette 11 in the data recorder 1 will now be described.

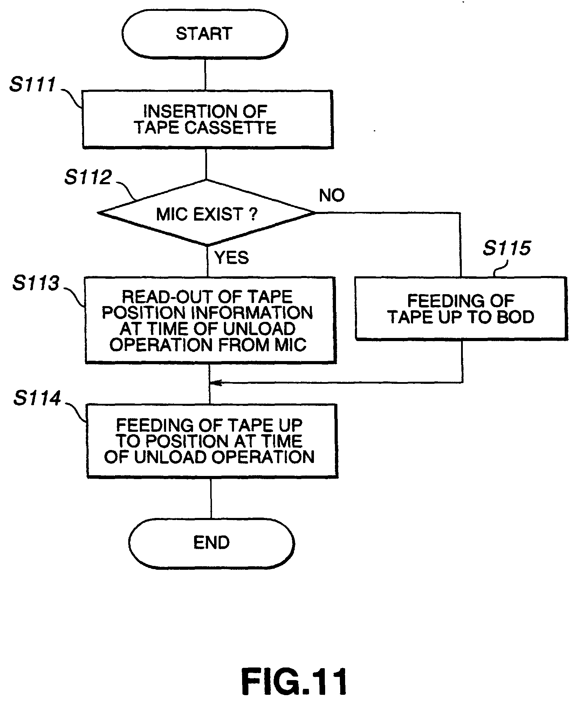

The operation sequence at the time of loading the tape cassette 11 in the data recorder 1 is shown in FIG. 11.

When the tape cassette 11 is inserted by the user (step S111), the data recorder 1 decides whether or not the MIC 18 is provided at the tape cassette 11 (step S112). When the MIC 18 exists at the tape cassette 11, the data recorder 1 reads out tape position information such as record No. etc. written at the time of unload operation from this MIC 18 (step S113) thereafter to allow the tape feed mechanism to be operative in accordance with this tape information to feed the tape 13 up to the position at the time of unload operation (step S114). On the other hand, when the MIC 18 does not exist in the tape cassette 11, the data recorder 1 allows the tape feed mechanism to be operative to feed the tape 13 up to BOD (step S115).

It is to be noted that such an approach may be employed to read out tape position information from the MIC 18 (after step S113) to allow the display 4 to display its content (record No., ID, etc.).

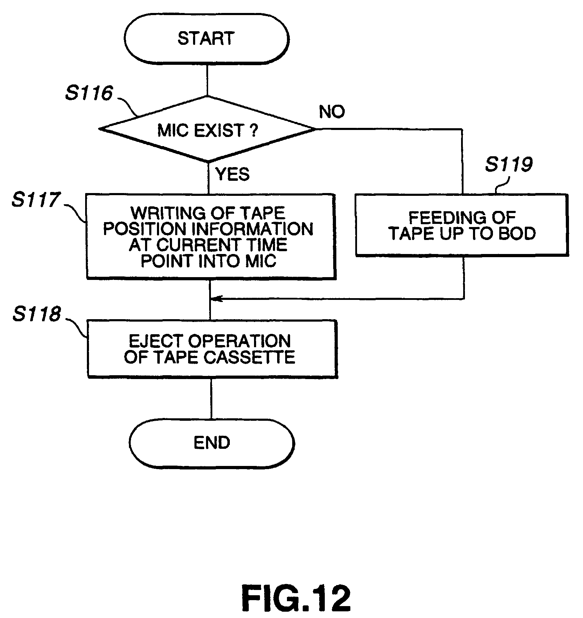

Fig. 12 shows the sequence of the tape cassette unload operation in the data recorder 1. When the eject button 6 is pushed by the user, the data recorder 1 decides whether or not the MIC 18 is provided at the tape cassette 11 (step S116). When the MIC 18 exists at the tape cassette 11, the data recorder 1 writes tape position information such as record No., etc. at the present time point into this MIC 18 (step S117) to eject the tape Cassette 11 at that tape position (step S118). On the other hand, when the MIC 18 dose not exist at the tape cassette 11, the data recorder 1 is operative to feed the tape 13 up to BOD (step S119) to eject the tape cassette 11 (step S118).

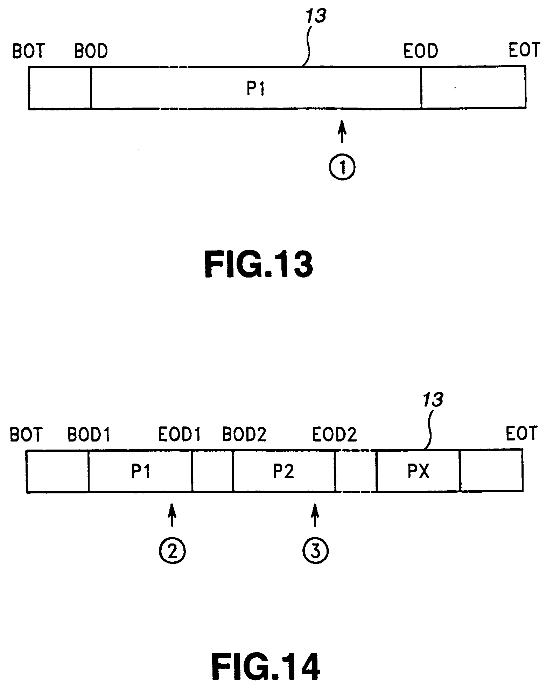

The positional relationship between the tape 13 and the magnetic head 25 (26) at the time of load/unload operation at the data recorder 1 will now be described with reference to Figs. 13 and 14.

Fig. 13 shows, in a model form, the tape 13 of the tape format in which the entire recording area is partitioned by one partition (partition P1), and indicates, by arrow, the relative position of the magnetic head 25 (26) with respect to the tape 13. For example, it is assumed that data is recorded or reproduced up to an intermediate point of the partition P1 and magnetic bead 25 (26) is located at the position between BOD and EOD of the tape 13 (position of 1 in Fig. 13). In this case, the data recorder 1 is operative to write tape position information (record No., etc.) at the position of 1 into the MIC 18 within the tape cassette 11 thereafter to eject the tape cassette 11 at that position without feeding the tape 13.

Further, when the tape cassette 1 is inserted, tape position information written at the time of unload operation is read out from the MIC 18. Thus, the tape 13 is fed on the basis of this position information. The magnetic head 25 (26) is caused to be precisely in alignment with the position of 1 on the tape 13. Thus, load operation of the tape cassette is completed.

Fig. 14 represents, in a model form, tape 13 of a tape format in which the entire recording area is partitioned by two partitions or more (partitions P1, P2 ··· PX) and indicates, by arrow, the relative position of the magnetic head 25 (26) with respect to this tape 13. For example, it is assumed that data is recorded or reproduced up to an intermediate point of a partition (e.g., partition P1) on the tape 13 and the magnetic head 25 (26) is located at the position between BOD1 and EOD1 of this partition P1 (position of 2 in Fig. 14). The data recorder 1 serves to write tape position information (record No. etc.) at the position of 2 into the MIC 18 within the tape cassette 11 thereafter to eject the tape cassette 11 at that position without feeding the tape 13. Further, when the tape cassette 11 is inserted, the data recorder 1 serves to read out, from the MIC 18, tape position information written at the time of unload operation. Thus, the tape 13 is fed according to this position information. The magnetic head 25 (26) is caused to be precisely in alignment with the position of 2 on the tape 13. Thus, load operation of the tape cassette is completed.

Moreover, for example, it is assumed that data is recorded or reproduced up to an intermediate point of other partition (partition P2) on the tape 13 and the magnetic head 25 (26) is located at the position between BOD2 and EOD2 of this partition P2 (position of 3 in Fig. 14). The data recorder 1 serves to write tape position information (record No., etc.) at the position of 3 into the MIC 18 within the tape cassette 11 thereafter to eject the tape cassette 11 at that position without feeding the tape 13. Further, when the tape cassette 11 is inserted, the data recorder 1 serves to read out, from the MIC 18, tape position information written at the time of unload operation. On the basis of this position information, the tape 13 is fed so that the magnetic head 25 (26) is caused to be precisely in alignment with the position of 3 on the tape 13. Thus, load operation of the tape cassette is completed.

As described above, in the data recorder 1 to which this invention is applied, when the tape cassette 11 is loaded, the position of the tape 13 can be precisely in alignment with the position at the time of unload operation. Thus, reliable recording or reproduction of data can be carried out. Accordingly, there is no necessity to feed the tape up to BOD at the time of load/unload operation of the tape cassette as in the prior art. Thus, load/unload operation of the tape cassette can be made even at a intermediate point of the tape. For this reason, the time required to load/unload the tape cassette can be shortened (e.g., in the case of 8mm video tape, in point of actual time, load time is about 30 seconds and unload time is about 15 seconds. Further, there is no possibility that the user is caused to have a feeling of disagreement.

In addition, in the data recorder 1 of this example, when the content (record No., ID, etc.) of tape position information which has been read out from the MIC 18 at the time of load operation of the tape cassette 11 is caused to be displayed, it is possible to quickly and precisely grasp tape position information without reading the physical tape.

While the embodiment of this invention has been described above, it is needless to say that this invention is not limited to such embodiment.

## Claims

1. A magnetic recording/reproducing apparatus for a tape cassette adapted so that a magnetic tape is accommodated within the cassette and a memory is provided at this cassette,
the apparatus comprising;
magnetic tape recording/reproducing means adapted so that the tape cassette is detachably loaded to carry out recording and reproduction of data in the magnetic tape of the loaded tape cassette;
memory recording/reproducing means for carrying out write and read operations of predetermined information in the memory provided at the loaded tape cassette; and
position information detecting means for detecting position information of the magnetic tape,
wherein the memory recording/reproducing means is adapted so that when the loaded tape cassette is unloaded, it writes, into the memory, position information of the magnetic tape at the time of unload operation.

2. A magnetic recording/reproducing apparatus as set forth in claim 1,
wherein the memory recording/reproducing means is adapted so that when the tape cassette is loaded, it reads out position information of the magnetic tape recorded in the memory.

3. A magnetic recording/reproducing apparatus as set forth in claim 2,
wherein the magnetic tape recording/reproducing means serves to feed the magnetic tape on the basis of position information of the magnetic tape which has been read out.

4. A magnetic recording/reproducing method for a tape cassette adapted so that a magnetic tape is accommodated within the cassette and a memory is provided at the cassette,
wherein when the tape cassette loaded at a recording/reproducing unit adapted for carrying out recording/reproduction of data in the magnetic tape is unloaded, position information of the magnetic tape at the time of unload operation is written into the memory.

5. A magnetic recording/reproducing method as set forth in claim 4,
wherein when the tape cassette is loaded in the recording/reproducing apparatus, position information of the magnetic tape recorded at the memory is read out.

6. A magnetic recording/reproducing method as set forth in claim 5,
wherein a procedure is taken to feed the magnetic tape on the basis of the position information of the magnetic tape which has been read out.

## Amended claims

### Amended claims under Art. 19.1 PCT

1. (Amended) A magnetic recording/reproducing apparatus used for data back-up or preservation of measurement data,
the apparatus comprising:
magnetic tape recording/reproducing mean adapted so that a tape cassette provided with a memory is detachably loaded, a magnetic tape being accommodated within the tape cassette, the magnetic tape recording/reproducing means being operative to carry out recording and reproduction of data in the magnetic tape of the loaded tape cassette;
memory recording/reproducing means for carrying out write and read operations of predetermined information in the memory provided at the loaded tape cassette; and
position information detecting means for detecting position information of the magnetic tape,
wherein the memory recording/reproducing means is adapted so that when the loaded tape cassette is unloaded, it writes, into the memory, position information of the magnetic tape at the time of unload operation.
2. A magnetic recording/reproducing apparatus as set forth in claim 1,
wherein the memory recording/reproducing means is adapted so that when the tape cassette is loaded, it reads out position information of the magnetic tape recorded in the memory.
3. A magnetic recording/reproducing apparatus as set forth in claim 2,
wherein the magnetic tape recording/reproducing means serves to feed the magnetic tape on the basis of position information of the magnetic tape which has been read out.
4. (Amended) A magnetic recording/reproducing method for data back-up or preservation of measurement data,
the method comprising steps of:
recording or reproducing data by a recording/reproducing unit in a tape cassette provided with a memory, a magnetic tape being accommodated within the tape cassette; and
writing, into the memory, position information of the magnetic tape at the time when the tape cassette loaded in the recording/reproducing unit is unloaded.
5. A magnetic recording/reproducing method as set forth in claim 4,
wherein when the tape cassette is loaded in the recording/reproducing apparatus, position information of the magnetic tape recorded at the memory is read out.
6. A magnetic recording/reproducing method as set forth in claim 5,
wherein a procedure is taken to feed the magnetic tape on the basis of position information of the magnetic tape which has been read out.
